(19) Europäisches Patentamt
European Patent Office
Office européen des brevets

(11) **EP 4 523 930 A1**

(12) **EUROPÄISCHE PATENTANMELDUNG**

(43) Veröffentlichungstag:
**19.03.2025 Patentblatt 2025/12**

(21) Anmeldenummer: **24198513.4**

(22) Anmeldetag: **04.09.2024**

(51) Internationale Patentklassifikation (IPC):
**B60D 1/06** (2006.01)   **B60D 1/24** (2006.01)
**B60D 1/62** (2006.01)

(52) Gemeinsame Patentklassifikation (CPC):
**B60D 1/06; B60D 1/248; B60D 1/62;** B60D 1/64

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **14.09.2023 DE 102023124919**

(71) Anmelder: **duotec GmbH
58553 Halver (DE)**

(72) Erfinder: **Weber, Werner
58553 Halver (DE)**

(74) Vertreter: **Lippert Stachow Patentanwälte
Rechtsanwälte
Partnerschaft mbB
Frankenforster Strasse 135-137
51427 Bergisch Gladbach (DE)**

(54) **MESSEINRICHTUNG ZUR BESTIMMUNG DER BELASTUNG EINES TRAGARMS**

(57) Die Erfindung betrifft einen Tragarm einer Anhängerkupplung eines Kraftfahrzeugs, wobei der Tragarm einen einstückigen Tragkörper aufweist, der einen Montageabschnitt zum Montieren an einer Montagefläche sowie einen Lastabschnitt zum Tragen einer Last aufweist, die mit ihrer Gewichtskraft in einer Vertikalrichtung den Lastabschnitt belastet, wobei der Montageabschnitt von dem Lastabschnitt in einer auf der Vertikalrichtung senkrecht stehenden Längsrichtung beabstandet ist und mit dem Lastabschnitt nur durch einen Verbindungsabschnitt des Tragkörpers verbunden ist, wobei der Verbindungsabschnitt in einer senkrecht auf Längs- und Vertikalrichtung verlaufenden Transversalrichtung durch zwei Transversalseiten begrenzt ist und an dem Tragkörper eine Sensoreinrichtung zum Ermitteln einer auf den Verbindungsabschnitt wirkenden Kraft angeordnet ist, wobei die Dehnungsmesseinrichtung mindestens drei Dehnungsmesssensoren umfasst, die an dem Verbindungsabschnitt an einer seiner Transversalseiten oder innerhalb einer in dem Verbindungsabschnitt vorgesehenen, in zumindest eine seiner Transversalseiten mündenden Ausnehmung angeordnet sind und um eine in Transversalrichtung verlaufende Achse verteilt angeordnet sind.

**Fig. 1**

EP 4 523 930 A1

**Beschreibung**

Die Erfindung betrifft einen Tragarm gemäß dem Oberbegriff von Anspruch 1 sowie ein Verfahren zur Herstellung eines Tragarms und einen durch das Verfahren hergestellten Tragarm sowie eine Messeinrichtung mit einem Tragarm.

Bei Tragarmen von Anhängerkupplungen besteht seit langem Bedarf, die Höhe der auf den Tragarm wirkenden Belastung zu bestimmen, um eine Überlastung zu vermeiden. Ein solcher Tragarm weist üblicherweise einen einstückigen Tragkörper auf, der einen Montageabschnitt zum Montieren an einer Montagefläche sowie einen Lastabschnitt zum Tragen einer Last aufweist, wobei der Montageabschnitt von dem Lastabschnitt in einer Längsrichtung beabstandet und nur durch einen Verbindungsabschnitt mit diesem verbunden ist. Üblicherweise ist die Montagefläche bei einer bestimmungsgemäßen Verwendung der Anhängerkupplung bzw. des Tragarms durch eine an der Karosserie eines Kraftfahrzeugs vorhandene Fläche realisiert, und der Lastabschnitt ist üblicherweise als kugelartiger Kopf der Anhängerkupplung ausgebildet. Eine gattungsgemäße Anhängerkupplung ist beispielsweise in EP 2 589 503 B1 offenbart. Die Montagefläche kann beispielsweise, wie auch in dem voranstehend angegebenen Dokument beispielhaft gezeigt, als Mantel einer hohlzylinderartigen Montageaufnahme des Kraftfahrzeugs ausgebildet sein oder als Außenseite eines Lagerkopfes, der bei der bestimmungsgemäßen Verwendung der Anhängerkupplung bzw. des Tragarms in einer von dem Montageabschnitt des Tragarms ausgebildeten Lageraufnahme aufgenommen ist. Unter der Annahme, dass der Montageabschnitt des Tragarms bei einer bestimmungsgemäßen Verwendung positionsfest und somit starr mit der Montagefläche des Kraftfahrzeugs verbunden ist, wirkt auf den Tragarm, insbesondere auf den Verbindungsabschnitt des Tragarms, bei einer Belastung des Lastabschnitts eine Kraft ein. Die Kraft kann eine Kraft in Längsrichtung sein, die durch eine Zugkraft am Lastabschnitt erzeugt wird, oder eine Kraft in Vertikalrichtung, die durch eine Gewichtskraft der Last erzeugt wird, oder eine Querkraft in einer senkrecht auf Längs- und Vertikalrichtung verlaufenden Transversalrichtung, die durch Bewegungen der Last in Transversalrichtung relativ zum Montageabschnitt bzw. relativ zur Montagefläche bzw. relativ zum Kraftfahrzeug bedingt ist. Im Stand der Technik sind bereits verschiedene Ansätze verfolgt worden, um möglichst kostengünstig, effektiv, präzise und auf möglichst einfache Weise die Belastung innerhalb des Verbindungsabschnitts zu bestimmen. Es ist bereits das Vorsehen von zumindest einem Dehnungsmessstreifen an einer Oberseite des Tragabschnitts sowie das Vorsehen von Magnetsensoren am Verbindungsabschnitt bekannt. Die im Stand der Technik bekannten Ansätze sind jedoch teilweise so gestaltet, dass ein komplexer Aufbau erforderlich ist, um eine Ermittlung der Belastung mit einer hinreichenden Präzisierung realisieren zu können, und/oder aufwendig an einem Tragarm zu realisieren und/oder zerstörungsanfällig, insbesondere bei üblichen, auf eine Anhängerkupplung einwirkenden äußeren Einflüsse bzw. Belastungen.

Der vorliegenden Erfindung liegt die Aufgabe zugrunde, einen Tragarm bzw. ein Verfahren bzw. eine Messeinrichtung bereitzustellen, mit dem bzw. der zumindest ein Nachteil, den bekannte Tragarme aufweisen, zumindest teilweise behoben wird.

Als eine Lösung der der vorliegenden Erfindung zugrunde liegenden Aufgabe schlägt die Erfindung einen Tragarm mit den Merkmalen gemäß Anspruch 1 vor. Der in Anspruch 1 beanspruchte Tragarm ist der Tragarm einer Anhängerkupplung eines Kraftfahrzeugs und weist einen einstückigen Tragkörper auf, der einen Montageabschnitt zum Montieren an einer Montagefläche sowie einen Lastabschnitt zum Tragen einer Last aufweist, die mit ihrer Gewichtskraft in einer Vertikalrichtung den Lastabschnitt belastet. Die Montagefläche kann eine an der Karosserie des Kraftfahrzeugs vorgesehene oder mit der Karosserie des Kraftfahrzeugs verbundene Fläche sein. Der Tragarm ist dazu ausgebildet, ausschließlich mittels seines Montageabschnitts an der Montagefläche montiert bzw. daran fixiert zu werden, sodass sämtliche außerhalb des Montageabschnitts vorgesehenen Abschnitte des Tragarms bei einer bestimmungsgemäßen Verwendung von der Montagefläche beabstandet sind. Bevorzugt ist der Tragkörper aus Metall hergestellt, insbesondere als Druckgussteil oder aus einem Metallstück gefräst ausgebildet. Der Lastabschnitt ist von dem Montageabschnitt in einer auf der Vertikalrichtung senkrecht stehenden Längsrichtung beabstandet und mit dem Lastabschnitt nur durch einen Verbindungsabschnitt des Tragkörpers verbunden. Der einstückig ausgebildete Tragkörper bildet somit sowohl den Montageabschnitt als auch den Lastabschnitt als auch den Verbindungsabschnitt aus, sodass die genannten drei Abschnitte in dem einstückigen Bauteil, als das der Tragkörper ausgebildet ist, integriert sind. Der Verbindungsabschnitt ist in einer senkrecht auf Längs- und Vertikalrichtung verlaufenden Transversalrichtung durch zwei Transversalseiten begrenzt. Die Transversalseiten sind somit die Seiten des Verbindungsabschnitts, die entlang der Transversalrichtung in entgegengesetzte Richtung weisen. An dem Tragkörper ist eine Sensoreinrichtung zum Ermitteln einer auf den Verbindungsabschnitt wirkenden Kraft angeordnet. Bei einer Belastung des Lastabschnitts mit einer Last, wie dies bei einer bestimmungsgemäßen Verwendung des Tragarms der Fall ist, wird zum einen durch die Last aufgrund ihrer Gewichtskraft eine Kraft in Vertikalrichtung auf den Lastabschnitt ausgeübt, wodurch aufgrund der Fixierung des Lastabschnitts an der Montagefläche mittels des Verbindungsabschnitts eine in Vertikalrichtung wirkende Relativkraft zwischen dem Montageabschnitt und dem Lastabschnitt erzeugt ist, die auf den Verbindungsabschnitt einwirkt, da er den Montageabschnitt mit dem Lastabschnitt verbindet. Bei einer in Längsrichtung wirkenden Zugkraft und einer in Transversalrichtung wirkenden Querkraft auf den Lastabschnitt wird eine entsprechende Relativkraft in der entsprechenden Richtung zwischen Montageabschnitt und Lastabschnitt erzeugt, die eine entsprechende Kraft in der entsprechenden Richtung auf den Verbindungsabschnitt ausübt. Grundsätzlich treten solche Belastungen bzw. Kräfte auf den Verbindungsabschnitt eines Tragarms in verschiedensten Anwendungsfällen auf, in denen ein Tragarm mit Montageabschnitt, von diesem beabstandeten Lastabschnitt und diesen verbindenden Verbindungsabschnitt zum Einsatz kommt, beispielsweise bei Tragarmen von Robotern oder bei Tragarmen zum Halten von Vorrichtungen, sodass die vorliegende Erfindung auch solche Tragarme mit vorteilhaften Eigenschaften ermöglicht. Bei einer Anhängerkupplung bestehen aufgrund der erforderlichen, durch die Gattung der Anhängerkupplung vorgegebenen Dimensionen und Materialbeschaffenheiten der Anhängerkupplung jedoch besondere Bedingungen, und die durch einen Anhänger, der bei einer bestimmungsgemäßen Verwendung einer Anhängerkupplung eine Kraft auf den Lastabschnitt ausübt, werden erhebliche Kräfte sowohl in Längsrichtung als auch in Vertikalrichtung als auch in Transversalrichtung ausgeübt, weshalb die vorliegende Erfindung gerade mit Bezug auf einen Tragarm einer Anhängerkupplung besonders vorteilhaft ist. Erfindungsgemäß umfasst die Sensoreinrichtung zumindest einen Dehnungsmesssensor, insbesondere zumindest zwei, insbesondere mindestens drei Dehnungsmesssensoren, der bzw. die an dem Verbindungsabschnitt angeordnet sind, und zwar an einer der Transversalseiten des Verbindungsabschnitts oder innerhalb einer in dem Verbindungsabschnitt vorgesehenen, in zumindest eine seiner Transversalseiten mündenden Ausnehmung. Eine solche in eine der Transversalseiten mündende Ausnehmung ist senkrecht zur Transversalrichtung von Abschnitten der Transversalseite umgeben, wobei sie sich ausgehend von diesen sie umgebenden Abschnitten der Transversalseite in Transversalrichtung zur transversalen Mitte des Verbindungsabschnitts hin erstreckt. Eine solche Ausnehmung kann beispielsweise als von einer der Transversalseiten aus zugängliche Mulde ausgebildet sein oder als in Transversalrichtung durch den Verbindungsabschnitt durchgehende Durchführung, wobei in diesem Fall die Ausnehmung in beide Transversalseiten des Verbindungsabschnitts mündet. Die in eine Transversalseite mündende Ausnehmung kann beispielsweise als von der Transversalseite aus zugängliche Mulde ausgebildet sein, deren Erstreckung in Transversalrichtung somit durch einen Muldenboden begrenzt ist, oder als in Transversalrichtung durch den Verbindungsabschnitt durchgehende Durchführung, wobei im zuletzt genannten Fall die Ausnehmung in beide Transversalseiten des Verbindungsabschnitts mündet. In einer Ausführungsform, in der die Sensormesseinrichtung mindestens drei Dehnungsmesssensoren aufweist, sind die Dehnungsmesssensoren der Sensoreinrichtung um eine in Transversalrichtung verlaufende Achse verteilt angeordnet. Bezogen auf einen Drehwinkel um diese Achse sind die Dehnungsmesssensoren bevorzugt jeweils um einen Drehwinkelabstand beabstandet. Dabei müssen die Dehnungsmesssensoren nicht zwingend einen selben Abstand zur Achse aufweisen. Die Achse ist eine gedachte Achse, um die herum die Dehnungsmesssensoren verteilt angeordnet sind. Durch die Anordnung von zumindest einem, insbesondere zumindest drei Dehnungsmesssensoren, an entweder einer Transversalseite oder innerhalb einer in Transversalrichtung verlaufenden Ausnehmung und durch die um die genannte Achse verteilte Anordnung der Dehnungsmesssensoren kann auf überraschend einfache Weise eine präzise Messung der Belastung des Verbindungsabschnitts gewährleistet werden. Denn indem der zumindest eine Dehnungsmesssensor an der Transversalseite bzw. in der Ausnehmung angeordnet ist, kann der Dehnungsmesssensor einfach elektrisch versorgbar bzw. kontaktierbar, gut geschützt und/oder einem für eine Belastungsmessung des Tragarms besonders vorteilhafte Position einfach angeordnet werden. Indem zumindest drei Dehnungsmesssensoren entsprechend räumlich angeordnet sind, können an drei verschiedenen Abschnitten der Transversalseite bzw. der die Ausnehmung begrenzenden Begrenzung jeweils eine Dehnung des Verbindungsabschnitts erfasst werden, wobei durch mathematische Auswertung der diese drei Dehnungen charakterisierenden Messsignale der Dehnungsmesssoren auf einfache Weise eine hinreichend präzise Aussage über die innerhalb des Verbindungsabschnitts in zumindest zwei, insbesondere in sämtliche drei der genannten Richtungen wirkenden Belastung vorliegt. In einer Ausführungsform ist der zumindest eine Dehnungsmesssensor der Sensoreinrichtung mit einer Auswerteeinrichtung verbunden, die zum Auslesen der Dehnungsmesssensoren ausgebildet ist, wobei durch die Auswerteeinrichtung sowohl eine auf den Lastabschnitt in Vertikalrichtung wirkende Kraft als auch eine in Transversalrichtung auf den Lastabschnitt wirkende Kraft und insbesondere darüber hinaus eine auf den Lastabschnitt in Längsrichtung wirkende Kraft ermittelbar ist, d. h. der Betrag der jeweiligen Kraft, wobei insbesondere die Auswerteeinrichtung zu ermitteln des Betrags der jeweiligen Kraft als Betrag der zwischen Montageabschnitt und Lastabschnitt wirkenden Relativkraft ausgebildet ist. Allgemein sei darauf hingewiesen, dass bei dem Vorsehen von mehreren Dehnungsmesssensoren auf diese alle die Eigenschaften bzw. Anordnungsweise bzw. Verwendungsweise zutreffen können, die vorliegend im Zusammenhang mit einem Dehnungsmesssensor beschrieben sind. Entsprechend können bei dem Vorsehen von nur einem Dehnungsmesssensor auf diesen alleine die Eigenschaften bzw. Anordnungsweise bzw. Verwendungsweise zutreffen, die vorliegend im Zusammenhang mit Ausführungsformen mit mehreren Dehnungsmesssensoren beschrieben sind.

In einer Ausführungsform sind die Dehnungsmesssensoren gleichmäßig um die Achse verteilt angeordnet. Somit weisen zwei in einer Drehrichtung um die Drehachse benachbarte Dehnungsmesssensoren denselben Drehwinkelabstand, bezogen auf eine Drehung um die Achse, zwischen einander auf. In einer Ausführungsform ist jeder Dehnungsmesssensor an jeweils einem Oberflächenabschnitt des Verbindungsabschnitts angeordnet, insbesondere sind die zumindest drei Dehnungsmesssensoren an jeweils einem Oberflächenabschnitt des Verbindungsabschnitts angeordnet. Jedem der zumindest drei Dehnungsmesssensoren ist somit ein Oberflächenabschnitt zugeordnet. Bevorzugt sind die Oberflächenabschnitte, die jeweils einem der mindestens drei Dehnungsmesssensoren zugeordnet sind, sämtlich zueinander abgewinkelt. Eine Abwinklung von zwei Oberflächenabschnitten zueinander ist dabei definiert durch eine Abwinklung der Flächennormalen der Oberflächenabschnitte, wobei bei einem gekrümmten Verlauf des Oberflächenabschnitts auf eine Normale, die senkrecht auf dem gemittelten Verlauf des Oberflächenabschnitts steht, abgestellt ist. Die flächige Erstreckung des Oberflächenabschnitte ist dabei definiert durch genau die flächige Erstreckung des Dehnungsmesssensors, über die hinweg der Dehnungsmesssensor mit der Oberfläche des Verbindungsabschnitts verbunden ist. Bevorzugt ist jeder der Oberflächenabschnitte, die jeweils einem der zumindest drei Dehnungsmesssensoren zugeordnet sind, zu jedem anderen der Oberflächenabschnitte, die einem der zumindest drei Dehnungsmesssensoren zugeordnet sind, um mindestens 30°, insbesondere um mindestens 40°, insbesondere um mindestens 60°, insbesondere um mindestens 80° abgewinkelt. Selbstverständlich kann der Verbindungsabschnitt weitere Oberflächenabschnitte aufweisen, zu denen die genannten Oberflächenabschnitte, die jeweils einem der zumindest drei Dehnungsmesssensoren zugeordnet sind, anderweitig oder auch nicht abgewinkelt sind. Für den Vorteil der beschriebenen Ausführungsform ist wesentlich, dass zumindest drei Dehnungsmesssensoren vorgesehen sind, die jeweils an einem Oberflächenabschnitt des Verbindungsabschnitts angeordnet sind, wobei diese Oberflächenabschnitte entsprechend zueinander abgewinkelt sind.

In einer Ausführungsform ist der zumindest eine Dehnungsmesssensor, sind insbesondere die Dehnungsmesssensoren, außerhalb einer neutralen Faser des Tragarms angeordnet. Eine solche neutrale Faser ist eine solche Faser, in der keine Materialdehnungen (von dem Begriff "Dehnung" ist vorliegend auch der Begriff "Stauchung" als negative Dehnung umfasst) entstehen, wenn eine Kraftbelastung in einer bestimmten Richtung erfolgt. Bevorzugt ist der Dehnungsmesssensor, insbesondere sind die mindestens drei Dehnungsmesssensoren, außerhalb der neutralen Faser bezogen auf eine Vertikalbelastung sowohl außerhalb der neutralen Faser bezogen auf eine Transversalbelastung als auch außerhalb der neutralen Faser bezogen auf eine Längsbelastung angeordnet, wobei die jeweilige Belastung auf eine Krafteinwirkung in der entsprechenden Richtung (Vertikalrichtung, Transversalrichtung, Längsrichtung) auf den Lastabschnitt relativ zum Montageabschnitt abstellt. Indem die Dehnungsmesssensoren außerhalb der neutralen Fasern angeordnet sind, kann eine Belastung des Verbindungsabschnitts in den entsprechenden Richtungen besonders vorteilhaft durch die Dehnungsmesssensoren erkannt bzw. ermittelt werden. In einer Ausführungsform sind die Dehnungsmesssensoren innerhalb der Ausnehmung angeordnet, wobei die Dehnungsmesssensoren jeweils außerhalb einer Transversalmitte des Verbindungsabschnitts angeordnet sind. Somit sind die Dehnungsmesssensoren näher an der ersten Transversalseite des Verbindungsabschnitts angeordnet als an der anderen Transversalseite, wobei die Dehnungsmesssensoren bevorzugt von der einen Transversalseite um max. 50 % des Transversalabstands beabstandet sind, um den sie von der anderen der beiden Transversalseiten in Transversalrichtung beabstandet sind. Dabei ist jeweils auf den Abstand des jeweiligen Dehnungsmesssensors in Transversalrichtung bis zum bezogen auf die Transversalrichtung mit ihm fluchtenden Seitenabschnitt der jeweiligen Transversalseite abgestellt.

In einer Ausführungsform sind die Dehnungsmesssensoren innerhalb der Ausnehmung angeordnet, wobei die Ausnehmung durch eine um die Achse umlaufend geschlossene, von dem Verbindungsabschnitt ausgebildete Wand begrenzt ist. Bevorzugt sind die Dehnungsmesssensoren an der Wand, insbesondere um die Achse gleichmäßig verteilt, angeordnet.

In einer Ausführungsform erstreckt sich der Verbindungsabschnitt mit einem ersten Tragabschnitt vertikal oberhalb und mit einem zweiten Tragabschnitt vertikal unterhalb der Ausnehmung. Erster und zweiter Tragabschnitt bezeichnen somit die räumlichen Abschnitte des Verbindungsabschnitts, mit denen er sich oberhalb bzw. unterhalb der Ausnehmung erstreckt. Der erste Tragabschnitt weist eine erste minimale vertikale Dicke auf, und der zweite Tragabschnitt weist eine zweite minimale vertikale Dicke auf. Die vertikalen Dicken geben die Erstreckungslänge des jeweiligen Tragabschnitts in Vertikalrichtung an. Die minimale Dicke ist die kleinste Dicke des jeweiligen Tragabschnitts, die dieser entlang der Erstreckung der Ausnehmung aufweist. Dabei ist selbstverständlich zu berücksichtigen, dass die Ausnehmung eine Erstreckung in Längs- und Transversalrichtung aufweist, und über diese Erstreckung hinweg kann in Ausführungsformen die vertikale Dicke des Tragabschnitts variieren, mit der er sich ausgehend von der Ausnehmung bis zur Oberseite bzw. Unterseite des Verbindungsabschnitts erstreckt. Die erste minimale Dicke beträgt zwischen 30 % und 300 %, insbesondere zwischen 50 % und 200 %, der zweiten minimalen Dicke. Durch eine entsprechende, verhältnismäßig geringe Abweichung der vertikalen Dicken von erstem und zweitem Tragabschnitt kann durch die Dehnungsmesssensoren, die in der Ausnehmung angeordnet sind, besonders vorteilhaft die Belastung, die in dem Verbindungsabschnitt besteht, erfasst werden. In einer Ausführungsform weist die Ausnehmung einen ununterbrochenen lichten Querschnitt auf, in dem die Dehnungsmesssensoren angeordnet sind. Durch die Anordnung der Dehnungsmesssensoren in einer Ausnehmung, die einen ununterbrochenen lichten Querschnitt aufweist, in deren ununterbrochenem lichten Querschnitt, kann durch die Dehnungsmesssensoren gemeinsam auf überraschend einfache Weise eine hinreichend präzise Aussage über Belastungen in dem Verbindungsabschnitt getroffen werden. In einer Ausführungsform sind die Dehnungsmesssensoren innerhalb der Ausnehmung angeordnet, wobei die Ausnehmung durch eine von dem Verbindungsabschnitt ausgebildete Begrenzungsfläche begrenzt ist und die Dehnungsmesssensoren an zur Achse weisenden Abschnitten der Begrenzungsfläche oder an in Transversalrichtung weisenden Abschnitten der Begrenzungsfläche angeordnet sind. Die Begrenzungsfläche kann durch die oben erläuterte, die Ausnehmung begrenzende Wand des Verbindungsabschnitts ausgebildet sein. Allgemein können die Oberflächenabschnitte, an denen die zumindest drei Dehnungsmesssensoren angeordnet sind und die somit jeweils einem der mindestens drei Dehnungsmesssensoren zugeordnet sind, parallel zueinander ausgerichtet sein. Dies ist besonders vorteilhaft in Kombination mit der vorteilhaften Ausführungsform, bei der die Dehnungsmesssensoren an in Transversalrichtung weisenden Abschnitten der Begrenzungsfläche angeordnet sind, wobei diese Abschnitte der Begrenzungsfläche entsprechend die Oberflächenabschnitte des Verbindungsabschnitts ausbilden. Bevorzugt sind die in Transversalrichtung weisenden Abschnitte der Begrenzungsfläche durch einen Boden der Ausnehmung oder durch eine in der Ausnehmung vorgesehene Stufe ausgebildet. Die Stufe kann beispielsweise mit einer Reduzierung des lichten Querschnitts der Ausnehmung auf Höhe der Stufe einhergehen. Durch die Anordnung der Dehnungsmesssensoren in der Ausnehmung können die Dehnungsmesssensoren besonders vorteilhaft geschützt sein.

Durch die Anordnung der Dehnungsmesssensoren an solchen Oberflächenabschnitten bzw. Abschnitten der Begrenzungsfläche, die in Transversalrichtung weisen, können die Dehnungsmesssensoren besonders einfach von der Transversalseite aus, in die die Ausnehmung mündet, in der Ausnehmung angeordnet und innerhalb der Ausnehmung an dem Verbindungsabschnitt fixiert werden.

In einer Ausführungsform sind die Dehnungsmesssensoren innerhalb der Ausnehmung angeordnet, wobei die Ausnehmung an ihrem transversalen Ende durch einen Deckel verschlossen ist. Hierdurch kann ein besonders vorteilhafter Schutz der Dehnungsmesssensoren gewährleistet sein. In einer Ausführungsform sind die Dehnungsmesssensoren innerhalb der Ausnehmung angeordnet, wobei in der Ausnehmung ferner eine elektrische Anschlussdose der Anhängerkupplung angeordnet ist und die Dehnungsmesssensoren und die Anschlussdose durch eine selbe Versorgungsleitung versorgt sind, die von einer Außenseite des Tragarms in die Ausnehmung hinein verläuft. Dabei ist zu berücksichtigen, dass eine übliche Anhängerkupplung stets eine elektrische Anschlussdose aufweist. Diese elektrischer Anschlussdose ist üblicherweise mittels einer Versorgungsleitung versorgt, die außen an der Anhängerkupplung entlang verläuft und in die Ausnehmung geführt ist, in der die Anschlussdose angeordnet ist. Indem die Dehnungsmesssensoren in derselben Ausnehmung wie die ohnehin typischerweise vorgesehene Anschlussdose vorgesehen werden und darüber hinaus über dieselbe Versorgungsleitung wie die Anschlussdose versorgt werden, kann die Sensoreinrichtung auf besonders einfache Weise in einer Anhängerkupplung integriert sein.

In einer Ausführungsform sind die Dehnungsmesssensoren jeweils als Halbleiter-Dehnungsmesssensor, insbesondere als Si-Dehnungsmesssensor, d. h. im Wesentlichen aus Silizium bestehend, beispielsweise mittels eines Si-Wafers, insbesondere dotierten Si-Wafers, hergestellt, ausgebildet. Beispielsweise können solche Halbleiter-Dehnungsmesssensoren einen Sensorkörperabschnitt aufweisen, der auf einen Wafer aufgebracht oder in einem Wafer integriert ist und auf den Elektroden zur Messung von Widerständen aufgebracht werden, beispielsweise mittels üblicher Halbleiter-Kontaktierungstechnologie, wie etwa Lithographie und/oder Dünnschichttechnik, wobei bevorzugt der Messkörper ein Si-Kristall ist, der insbesondere dotiert sein kann. Der Wafer bildet somit ein Substrat aus, auf dem der Sensorkörperabschnitt angeordnet ist. Beispielsweise kann der Sensorkörperabschnitt in dem Wafer integriert ausgebildet sein, indem der Wafer (der bevorzugt ein Si-Kristall ist) mit Ionen zur Dotierung lokal bestrahlt wird. Beispielsweise kann der Sensorkörperabschnitt auf dem Wafer angeordnet werden, indem ein Si-Kristall, insbesondere dotierter Si-Kristall, mittels Epitaxie-Verfahrens auf dem Wafer aufgebracht wird. Halbleiter-Dehnungsmesssensoren, die einen Si-Kristall bzw. Si-Kristall-Sensorkörperabschnitt umfassen, werden vorliegend als Si-Kristall-Dehnungsmesssensoren bezeichnet. Halbleiter-Dehnungsmesssensoren beruhen auf dem Grundprinzip, dass durch eine Dehnung des Halbleiter-Dehnungsmesssensors die Bandstruktur verändert wird, wodurch sich seine Resistivität verändert. Als besonders vorteilhaft haben sich Si-Kristall-Dehnungsmesssensoren herausstellt, bei denen aufgrund der Si-Kristallstruktur die Veränderung der Bandstruktur besonders gut reproduzierbar ist und zu sehr präzisen Veränderungen der Resistivität führt. Dabei hat sich als besonders vorteilhaft herausgestellt, dass solche Halbleiter-Dehnungsmesssensoren, insbesondere Si-Dehnungsmesssensoren, insbesondere Si-Kristall-Dehnungsmesssensoren, auch zur Detektion von Dehnungen in zwei aufeinander senkrecht stehenden Richtungen geeignet sind. So kann an einem solchen Halbleiter durch Messung des Widerstands die Veränderung der Bandstruktur festgestellt werden, die auf einer Dehnung des Halbleiters in den beiden verschiedenen Richtungen beruht und hierauf präzise auf eine Dehnung des Dehnungsmesssensors in diesen beiden Richtungen rückgeschlossen werden. Es hat sich herausgestellt, dass ein solcher Halbleiter-Dehnungsmesssensor einen besonders großen K-Faktor aufweist, d. h. ein besonders großes Verhältnis zwischen der Widerstandsänderung zur Längenänderung des Dehnungsmesssensors in einer bestimmten Messrichtung. Der K-Faktor wird üblicherweise angegeben

$$K = \frac{\Delta R / R}{\varepsilon}$$

als: , wobei $\varepsilon$ die Längenänderung, d. h. Dehnung des Dehnungsmesssensors, charakterisiert und R den Widerstand des Dehnungsmesssensors angibt. Im Vergleich zu herkömmlichen Foliendehnungsmesssensoren kann ein Halbleiter-Dehnungsmesssensor einen um etwa 40-fach größeren K-Faktor aufweisen. Die Erfinder haben erkannt, dass trotz der erhöhten Herstellkosten für einen solchen Halbleiter-Dehnungsmesssensor ein solcher Dehnungsmesssensor dennoch kostengünstig und zur Realisierung einer hochauflösenden Messeinrichtung eingesetzt werden kann, da ein solcher Halbleiter-Dehnungsmesssensor besonders klein ausgestattet werden kann und darüber hinaus an diesem auf besonders einfache Weise mittels Halbleiter-Kontaktierungstechnik elektrische Elektroden vorgesehen werden können, mittels derer der Halbleiter-Dehnungsmesssensor kontaktiert bzw. mit Strom gespeist und ausgelesen werden kann. Als besonders vorteilhaft hat sich herausgestellt, die Dehnungsmesssensoren jeweils dergestalt auszugestalten, dass sie eine Dicke von weniger als 500 µm, insbesondere weniger als 200 µm, insbesondere weniger als 100 µm, insbesondere weniger als 50 µm und/oder eine flächige Erstreckung von weniger als 1 mm², insbesondere weniger als 0,5 mm², insbesondere weniger als 0,3 mm² aufweisen. Die flächige Erstreckung gibt dabei allgemein die Erstreckung des Dehnungsmesssensors entlang zwei aufeinander senkrecht stehenden Flächenrichtungen an, wobei die Dicke des Dehnungsmesssensors die Erstreckungslänge des Dehnungsmesssensors senkrecht zu den beiden Flächenrichtungen angibt. Die Erfinder haben festgestellt, dass gerade mit solchen besonders dünnen und/oder besonders flächig kleinen Dehnungsmesssensoren auf kostengünstige Weise eine hochauflösende Messeinrichtung realisiert werden kann, insbesondere wie unten ausgeführt, an einem solchen Dehnungsmesssensor.

In einer Ausführungsform sind die Dehnungsmesssensoren auf einem Trägerelement positionsfest fixiert. Bevorzugt ist das Trägerelement aus Metall hergestellt, insbesondere aus einem Metallblech. Das Trägerelement weist bevorzugt eine flächige Fixierseite auf, mit der es an dem Verbindungsabschnitt anliegt. Das Trägerelement weist ferner eine flächige Sensorseite auf, an der die Dehnungsmesssensoren angeordnet sind. Die flächige Sensorseite und die flächige Fixierseite sind jeweils das Trägerelement begrenzende Außenseiten des Trägerelements. Bevorzugt sind die Sensorseite und die Fixierseite durch Schmalseiten des Trägerelements miteinander verbunden, die abgewinkelt zu Sensorseite und Fixierseite verlaufen und deren Flächeninhalt wesentlich kleiner ist als der Flächeninhalt von Sensorseite und als der Flächeninhalt von Fixierseite, insbesondere max. 10 %, insbesondere max. 5 %, insbesondere max. 2 % des Flächeninhalts von Fixierseite und des Flächeninhalts von Sensorseite beträgt. Das Trägerelement kann beispielsweise nach Art einer Platte oder nach Art eines Hohlzylinders ausgebildet sein, wobei bei einer Ausbildung des Trägerelements nach Art einer Platte Sensorseite und Fixierseite voneinander wegweisende Plattenflächen der Platte ausbilden und bei einer Ausbildung des Trägerelements als Hohlzylinder eine von Sensor- und Fixierseite die Innenmantelseite und die andere die Außenmantelseite des Hohlzylinders ausbildet. Allgemein bevorzugt sind die flächige Fixierseite und die flächige Sensorseite gegenüberliegende, das Trägerelement mit seiner Erstreckung zwischen sich begrenzende Seiten des Trägerelements. Bevorzugt ist das Trägerelement nach Art einer ringförmigen Platte ausgebildet. Allgemein bevorzugt ist das Trägerelement mit seiner Fixierseite positionsfest mit dem Verbindungsabschnitt verbunden, sodass das Trägerelement eine Dehnung des Verbindungsabschnitts aufnehmen kann. Das Trägerelement kann beispielsweise mit dem Verbindungsabschnitt verklebt, verschweißt und/oder verschraubt sein. Das Trägerelement kann einteilig oder mehrteilig ausgebildet sein. Beispielsweise kann bei einer mehrteiligen Ausbildung des Trägerelements das Trägerelement mehrere Trägerelementabschnitte aufweisen, die jeweils als voneinander separate Bauteile ausgebildet und somit jeweils einzeln an dem Verbindungsabschnitt fixierbar sind, wobei jeder der Trägerelementabschnitte jeweils einen Abschnitt der Fixierseite und einen Abschnitt der Sensorseite des Trägerelements ausbildet. Die Trägerelementabschnitte sind in einer Ausführungsform unmittelbar aneinander anliegend an dem Verbindungsabschnitt befestigt, in einer anderen Ausführungsform voneinander beabstandet an dem Verbindungsabschnitt befestigt. Beispielsweise kann bei einer Ausführungsform, bei der das Trägerelement nach Art einer Platte ausgebildet ist, jeder der Trägerelementabschnitte jeweils einen plattenförmigen Kreisringabschnitt ausbilden, und bei einer Ausführungsform, bei der das Trägerelement nach Art eines Hohlzylinders ausgebildet ist, jeder der Trägerelementabschnitte einen Winkelabschnitt und/oder Axialabschnitt des Hohlzylinders ausbilden, wobei einen Winkelabschnitt ausbildende Trägerelementabschnitte in einem Drehwinkel um die Zylinderachse des Hohlzylinders nebeneinander angeordnet sind und Axialabschnitte des Hohlzylinders ausbildende Trägerelementabschnitte axial entlang der Zylinderachse des Hohlzylinders nebeneinander angeordnet sind. Allgemein bevorzugt ist an jedem Trägerelementabschnitt jeweils zumindest einer der Dehnungsmesssensoren angeordnet. Die Dehnungsmesssensoren sind somit mittelbar über das Trägerelement bzw. den ihnen jeweils zugeordneten Trägerelementabschnitt des Trägerelements, an dem sie angeordnet sind, an dem Verbindungsabschnitt befestigt. Die mittelbare Befestigung der Dehnungsmesssensoren an dem Verbindungsabschnitt mittels des Trägerelements bringt den besonderen Vorteil mit sich, dass durch die geometrische Ausgestaltung des Trägerelements und dessen Anbringung an dem Verbindungsabschnitt und die Anbringung der Dehnungsmesssensoren an dem Trägerelement die Empfindlichkeit der Dehnungsmesssensoren absolut und relativ zueinander eingestellt werden kann, so dass die geometrische Ausgestaltung des Trägerelements bzw. dessen Anbringung an dem Verbindungsabschnitt bzw. die Anbringung der Dehnungsmesssensoren an dem Trägerelement zur Einstellung der Empfindlichkeit gezielt vorgesehen werden kann. Hierbei kann das Vorsehen mehrere Trägerelementabschnitte, an denen jeweils zumindest einer der Dehnungsmesssensoren fixiert ist, besonders vorteilhaft sein. In einer Ausführungsform sind die Dehnungsmesssensoren durch Aufglasen mit dem Trägerelement verbunden, d.h. mit dem jeweiligen Oberflächenabschnitt des Trägerelements verbunden, über den hinweg sie an den dem Trägerelement fixiert sind. An dieser Stelle sei allgemein darauf hingewiesen, dass jeweils einer der Dehnungsmesssensoren jeweils einem Oberflächenabschnitt zugeordnet ist, wobei der jeweilige Dehnungsmesssensor an dem ihm zugeordneten Oberflächenabschnitt so befestigt ist, dass er eine Dehnung des Oberflächenabschnitt aufnehmen kann. Die Erfinder haben festgestellt, dass durch die Anbindung des Dehnungsmesssensors an den Trägerelement bzw. dem jeweiligen Oberflächenabschnitt mittels Aufglasens der Dehnungsmesssensor besonders zuverlässig starr mit dem jeweiligen Oberflächenabschnitt verbunden werden kann, sodass eine Dehnung des Oberflächenabschnitts möglichst verlustfrei auf den Dehnungsmesssensor übertragen wird. Das Aufglasen ist ein bekannter Prozess, bei dem Glas, das üblicherweise auf amorphem SiO2 basiert, als Bindemittel zum Verbinden des Dehnungsmesssensors mit dem Oberflächenabschnitt verwendet wird. Bei einem solchen Aufglasen wird üblicherweise ein Glasfritte-Material zwischen dem Dehnungsmesssensor und dem Oberflächenabschnitt vorgesehen, wonach mittels Durchfahrens vordefinierter Temperaturverläufe ein Ausheizen erfolgt. Besonders bevorzugt wird bei dem Ausheizen der gesamte Verbindungsbereich zwischen Dehnungsmesssensor und Oberflächenabschnitt des Trägerelements, insbesondere somit über die gesamte untenstehend erläuterte Messfläche, zunächst auf ca. 400°C aufgeheizt, anschließend auf unter 50°C abgekühlt und anschließend erneut aufgeheizt, zumindest bis 400°C, und wieder abgekühlt. Durch das Aufglasen ist der Dehnungsmesssensor besonders zuverlässig und starr mit dem Oberflächenabschnitt bzw. Trägerelement verbunden, wobei besonders bevorzugt aufgrund des Aufglasens der Dehnungsmesssensor durch eine anorganische Verbindung mit dem ihm zugeordneten Oberflächenabschnitt des Trägerelements verbunden ist. Bevorzugt sind sowohl der Dehnungsmesssensor als auch sämtliches Material, mittels dessen der Dehnungsmesssensor mit dem Oberflächenabschnitt bzw. Trägerelement verbunden ist, anorganisch, wodurch einer alterungsbedingten Funktionsbeeinträchtigung besonders wirksam vorgebeugt sein kann. Besonders bevorzugt ist jeweils eine elektrisch isolierende Glasschicht zwischen dem jeweiligen Dehnungsmesssensor und dem jeweiligen, d. h. ihm zugeordneten, Oberflächenabschnitt vorgesehen. Bevorzugt weist diese Glasschicht eine Dicke von mindestens 50 nm, sondern mindestens 100 nm, insbesondere mindestens 200 nm auf. Durch die elektrisch isolierende Glasschicht kann eine besonders gute elektrische Entkopplung zwischen dem Trägerelement bzw. dem Verbindungsabschnitt und dem Dehnungsmesssensor realisiert sein, wodurch Störeinflüsse des Verbindungsabschnitts bzw. Trägerelement auf das Auslesen von Messsignalen aus dem Dehnungsmesssensoren besonders vorteilhaft reduziert sein können.

In einer Ausführungsform weisen die Dehnungsmesssensoren jeweils eine Messfläche auf, die sich in einer ersten Flächenrichtung und in einer zweiten Flächenrichtung erstreckt, wobei die zweite Flächenrichtung senkrecht auf der ersten Flächenrichtung steht. Die Messfläche ist durch die beiden Flächenrichtungen aufgespannt. Die Messfläche ist fest mit einem Oberflächenabschnitt verbunden, der - bei Ausführungsformen mit Trägerelement - von dem Trägerelement oder - bei Ausführungsformen ohne Trägerelement - direkt von dem Verbindungsabschnitt ausgebildet ist. Jedem Dehnungsmesssensor ist genau ein Oberflächenabschnitt zugeordnet, dessen flächiger Erstreckung der Messfläche des Dehnungsmesssensor entspricht, über die hinweg der Dehnungsmesssensor an das Trägerelement bzw. den Verbindungsabschnitt angebunden ist. Bevorzugt ist der Dehnungsmesssensor als flächiger Dehnungsmesssensor ausgestaltet, dessen Dicke durch seine Erstreckungslänge senkrecht zur Messfläche definiert ist. Die Flächenrichtungen können geradlinig oder gekrümmt verlaufen, in einer Ausführungsform verläuft eine der Flächenrichtungen geradlinig, die andere gekrümmt. Bevorzugt sind die Dehnungsmesssensoren als Halbleiter-Dehnungsmesssensoren ausgebildet und jeweils mittels eines Wafers hergestellt und weisen eine ebene Seite auf, die die Messfläche als ebene Messfläche ausbildet, so dass die Messrichtungen jeweils gerade sind. Bevorzugt weist der Dehnungsmesssensor über seine Erstreckung entlang der ersten und zweiten Flächenrichtung hinweg überall dieselbe Dicke auf. Besonders bevorzugt erstreckt sich die Messfläche in jeder der Flächenrichtungen über mindestens 0,1 mm, insbesondere mindestens 0,2 mm, insbesondere mindestens 0,3 mm und weniger als 2 mm, insbesondere weniger als 1 mm, insbesondere weniger als 0,8 mm. Bevorzugt weist die Fläche einen Flächeninhalt von mindestens 0,1 mm², insbesondere mindestens 0,2 mm², insbesondere weniger als 1 mm², insbesondere weniger als 0,5 mm², insbesondere weniger als 0,3 mm² auf. Besonders bevorzugt ist die Erstreckungslänge des Dehnungsmesssensors entlang erster und zweiter Flächenrichtung durch die Messfläche definiert, sodass sich der Dehnungsmesssensor in der ersten und zweiten Flächenrichtung nicht über die Messfläche hinaus erstreckt. Dabei ist auf den jeweiligen Dehnungsmesssensor abgestellt. Besonders bevorzugt sind die Dehnungsmesssensoren jeweils über ihre Messfläche hinweg starr mit dem jeweiligen Oberflächenabschnitt des Trägerelements und/oder des Verbindungsabschnitts (bei einem direkten Anordnen des Dehnungsmesssensors an dem Verbindungsabschnitt ohne Trägerelement) verbunden, der ihnen jeweils zugeordnet ist. Innerhalb der Erstreckung der Messfläche, die die Messfläche entlang der ersten und zweiten Flächenrichtung aufweist, sind an dem Dehnungsmesssensor mindestens zwei Elektroden, insbesondere mindestens vier Elektroden angeordnet. Die genannten Elektroden sind bevorzugt sämtlich an dem Sensorkörperabschnitt angeordnet. Dabei können die Elektroden zur Messfläche in eine Richtung versetzt angeordnet sein, die sich senkrecht zur ersten und zweiten Flächenrichtung erstreckt. Beispielsweise kann die Messfläche eine Unterseite des Dehnungsmesssensors ausbilden, wobei die Elektroden an der Oberseite des Dehnungsmesssensors angeordnet sind, sich jedoch innerhalb der Erstreckung der Messfläche entlang der ersten und zweiten Flächenrichtung befinden. Besonders bevorzugt sind vier Elektroden innerhalb der Erstreckung der Messfläche entlang den Flächenrichtungen an dem Dehnungsmesssensor vorgesehen. Bevorzugt sind die Elektroden als Vollbrücke verschaltet. Das Vorsehen einer solchen Vollbrücke ist in der Messtechnik hinreichend bekannt und besonders vorteilhaft, da durch eine solche Brückenschaltung eine Differenzbildung zwischen in der Brückenschaltung miteinander verschalteten Widerständen inhärent gewährleistet ist, wodurch Umwelteinflüsse, wie etwa Temperatureinflüsse, in ihren Auswirkungen auf die Korrektheit des erzielten Messergebnisses bzw. des ausgegebenen Messsignals nach Möglichkeit reduziert werden können. Eine solche Brückenschaltung weist üblicherweise zwei parallele Brückenarme auf, in denen jeweils zumindest zwei Widerstände in Reihe geschaltet sind, wobei an den Armen ein Mittenabgriff zwischen zwei Widerständen der Arme erfolgt. Durch Differenzmessung zwischen den Mittenabgriffen kann ein Sensorsignal erzeugt werden, das anschließend elektronisch aufbereitet wird, wobei das Sensorsignal selbst das Messsignal des Dehnungsmesssensors sein kann oder das aufbereitete Signal. Durch das Vorsehen von vier Elektroden können durch paarweises Abgreifen von Widerständen zwischen jeweils zwei dieser Elektroden sechs verschiedene Widerstände abgegriffen werden, wobei am Dehnungsmesssensor selbst die erforderlichen Elektroden für eine Vollbrückenschaltung vorgesehen sein können, wobei der Dehnungsmesssensor gleichzeitig eine sehr geringe Größe aufweisen kann. Besonders bevorzugt ist an dem Dehnungsmesssensor eine weitere Elektrode vorgesehen, durch die der Dehnungsmesssensor mit einem Potenzial beaufschlagt werden kann, insbesondere um parasitäre Ströme zu verhindern. Bevorzugt ist die weitere Elektrode außerhalb eines Sensorkörperabschnitts des Dehnungsmesssensors angeordnet, an dem die erläuterten übrigen Elektroden angeordnet sind (von denen z.B. mindestens zwei, insbesondere mindestens vier vorgesehen sind und zwischen denen ein Widerstand abgegriffen sind, so dass sie als Messelektroden vorgesehen sind). Beispielsweise können die übrigen (z.B. vier) Elektroden (d.h. die Messelektroden) jeweils an einer Oberfläche eines auf einem Substrat angeordneten Sensorkörperabschnitts angeordnet sein, wohingegen die weitere Elektrode außerhalb des Sensorkörperabschnitts an dem Substrat angeordnet ist, so dass ein auf die weitere Elektrode aufgebrachtes Potenzial eine Widerstandsmessung zwischen den übrigen Elektroden nicht beeinträchtigt sondern nur der Vermeidung parasitärer Ströme dient. Ein von dem Dehnungsmesssensor ausgebendes (passiv auslesbar oder aktiv ausgebendes) Messsignal, das eine Dehnung des Dehnungsmesssensors an seiner Messfläche in einer Messrichtung charakterisiert, ist über die genannten, an dem Dehnungsmesssensor vorgesehenen Elektroden auslesbar. In einer Ausführungsform ist an dem Dehnungsmesssensor selbst eine Differenzschaltung, insbesondere Brückenschaltung vorgesehen, sodass aus dem Dehnungsmesssensor selbst ein Messsignal ausgelesen werden kann, das durch Differenzbildung zwischen den an den Elektroden vorliegenden Spannungen und/oder Strömen ermittelt wird. In einer Ausführungsform wird das Messsignal unmittelbar durch die Elektroden bereitgestellt und anschließend mit einer Datenverarbeitungseinrichtung verarbeitet. Allgemein bevorzugt sind die Dehnungsmesssensoren jeweils über ihre Messfläche hinweg stoffschlüssig mit dem jeweiligen Oberflächenabschnitt des Trägerelements bzw. Verbindungsabschnitts verbunden, an dem sie angeordnet sind. Besonders bevorzugt sind die Dehnungsmesssensoren durch eine anorganische Verbindung, die zwischen dem jeweiligen Dehnungsmesssensor und dem jeweiligen Oberflächenabschnitt vorgesehen ist, mit dem jeweiligen Oberflächenabschnitt verbunden. In einer Ausführungsform sind an zumindest einigen der Dehnungsmesssensoren mindestens vier Elektroden angeordnet, wobei aus den Elektroden ein Messsignal auslesbar ist, das sowohl von einer Dehnung des Dehnungsmesssensors in der Messrichtung als auch von einer Dehnung des Dehnungsmesssensors in einer senkrecht auf der Messrichtung stehenden Zusatzmessrichtung abhängt. Somit beeinflussen Dehnungen, die in zwei aufeinander senkrecht stehenden Richtungen innerhalb der Messfläche auf den Dehnungsmesssensor ausgeübt werden, das Messsignal.

In einer Ausführungsform ist das Trägerelement zusammen mit den Dehnungsmesssensoren, die an ihm angeordnet sind, als ein separates Funktionsbauteil ausgebildet, dass an dem Verbindungsabschnitt montierbar ist. Bevorzugt ist das Funktionsbauteil an dem Verbindungsabschnitt lösbar montierbar. In jedem Fall ist das Funktionsbauteil mit dem Verbindungsabschnitt fest verbunden, sodass eine innerhalb des Verbindungsabschnitts auftretende Dehnung zu einer entsprechenden Dehnung in dem Trägerelement des Funktionsbauteils führt. Bevorzugt umfasst das Funktionsbauteil elektrische Leiter, die mit den Dehnungsmesssensoren verbunden sind, insbesondere mit den vorstehend erläuterten, an den Dehnungsmesssensoren angeordneten Elektroden, und an die eine Auswerteeinrichtung anschließbar ist. Die elektrischen Leiter können beispielsweise über eine Anschlussschnittstelle in der Anhängerkupplung mit Versorgungsleitungen verbunden sein, über die auch eine Anschlussdose der Anhängerkupplung versorgt ist.

Die Erfindung betrifft ferner ein Verfahren zur Realisierung eines Tragarms. Bei dem erfindungsgemäßen Verfahren wird ein einstückiger Tragkörper bereitgestellt, der einen Montageabschnitt zum Montieren an einer Montagefläche sowie einen Lastabschnitt zum Tragen einer Last aufweist, die mit ihrer Gewichtskraft in einer Vertikalrichtung den Lastabschnitt belastet. Bevorzugt ist die Montagefläche als von einer Karosserie umfassten oder an dieser fixierten Fläche eines Kraftfahrzeugs ausgebildet. Der Montageabschnitt ist von dem Lastabschnitt in einer auf der Vertikalrichtung senkrecht stehenden Längsrichtung beabstandet und mit dem Lastabschnitt nur durch einen Verbindungsabschnitt des Tragkörpers verbunden. Der Verbindungsabschnitt ist in einer senkrecht auf Längs- und Vertikalrichtung verlaufenden Transversalrichtung durch zwei Transversalseiten begrenzt, wobei zumindest ein Dehnungsmesssensor, insbesondere mehrere, insbesondere mindestens drei Dehnungsmesssensoren, an dem Verbindungsabschnitt an einer seiner Transversalseiten oder innerhalb einer in dem Verbindungsabschnitt vorgesehenen, in zumindest einer seiner Transversalseiten mündenden Ausnehmungen um eine in Transversalrichtung verlaufende Achse verteilt angeordnet wird bzw. werden. Bevorzugt sind die Dehnungsmesssensoren von einem von dem Tragarm separaten Funktionsbauteil umfasst, wobei das Funktionsbauteil neben den Dehnungsmesssensoren ferner ein Trägerelement umfasst, an dem die Dehnungsmesssensoren angeordnet sind, wobei die Dehnungsmesssensoren als Teil des Funktionsbauteils an dem Verbindungsabschnitt angebracht werden. Bei dem erfindungsgemäßen Verfahren wird somit bevorzugt das Funktionsbauteil an dem Verbindungsabschnitt montiert, wobei hierdurch die Dehnungsmesssensoren an dem Verbindungsabschnitt montiert werden. Das Funktionsbauteil kann beispielsweise dergestalt an dem Verbindungsabschnitt montiert werden, dass es positionsfest mit diesem verbunden wird, beispielsweise durch Kleben, Schweißen und/oder Schrauben. Die Erfindung betrifft ferner einen Tragarm, der mit dem vorliegend erläuterten Verfahren hergestellt ist. Der Tragarm kann in Ausführungsformen von erfindungsgemäßen Verwendungen auch an Montageflächen von Vorrichtungen montiert werden, die nicht Teil eines Kraftfahrzeugs sind, beispielsweise an von einem Roboter oder einem Gebäude ausgebildeten Montageflächen. Das erfindungsgemäße Verfahren kann in vorteilhaften Ausführungsformen Merkmale aufweisen, die vorliegend im Zusammenhang mit Ausführungsformen eines erfindungsgemäßen Tragarms beschrieben sind. Entsprechend kann der durch das Verfahren hergestellte Tragarm solche vorteilhaften Merkmale in vorteilhaften Ausführungsformen aufweisen.

Die Erfindung betrifft ferner eine Messeinrichtung zum Bestimmen der Belastung eines Tragarms. Die Messeinrichtung umfasst einen erfindungsgemäßen Tragarm sowie eine Auswerteeinrichtung, die zum Auslesen von Messsignalen des mindestens einen Dehnungsmesssensors bzw. der Dehnungsmesssensoren mit diesen verbunden ist und zum Auswerten der aus dem Dehnungsmesssensor bzw. den Dehnungsmesssensoren ausgelesenen Messsignale unter Ausgabe eines Werts für eine Belastung des Tragarms ausgebildet ist. Beispielsweise kann der Wert eine in dem Tragarm vorliegende Dehnung, insbesondere unter Angabe der Richtung, in der die Dehnung vorliegt, und/oder die Angabe einer auf den Lastabschnitt einwirkenden Kraft, insbesondere unter Angabe der Richtung, in der die Kraft wirkt, sein.

Die verschiedenen erfindungsgemäßen Ausführungsformen können jeweils Merkmale aufweisen, die im Zusammenhang mit anderen erfindungsgemäßen Ausführungsformen offenbart sind. Die erfindungsgemäßen Ausführungsformen sind besonders vorteilhaft miteinander kombinierbar. Ferner können erfindungsgemäße Ausführungsformen Merkmale aufweisen, die vorliegend im Zusammenhang mit gattungsgemäßen Ausführungsformen beschrieben sind.

Die Erfindung wird nachfolgend unter Bezugnahme auf drei Figuren anhand von Ausführungsbeispielen näher erläutert.

Es zeigen:

Figur 1: in einer schematischen Prinzipdarstellung eine Ausführungsform eines erfindungsgemäßen Tragarms;

Figur 2: in verschiedenen schematischen Prinzipdarstellungen Bestandteile einer Ausführungsform eines erfindungsgemäßen Tragarms;

Figur 3: in verschiedenen schematischen Prinzipdarstellungen eine Ausführungsform eines erfindungsgemäßen Tragarms.

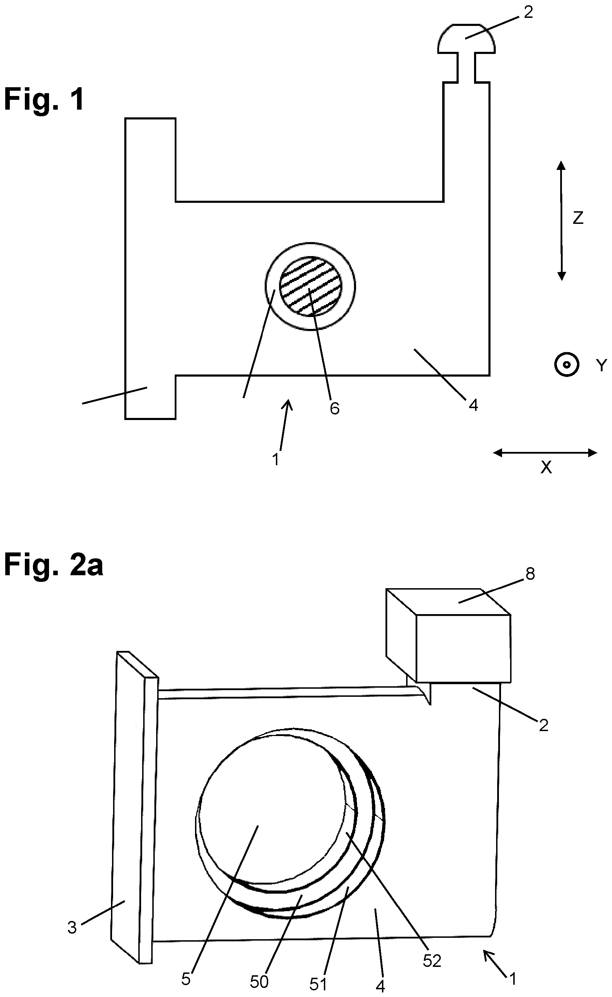

In Figur 1 ist schematisch stark vereinfacht eine Ausführungsform eines erfindungsgemäßen Tragarms 1 stark vereinfacht zur Veranschaulichung von grundlegenden Eigenschaften des Tragarms 1 dargestellt. Der Tragarm 1 umfasst einen Tragkörper, der einen Lastabschnitt 2, einen Montageabschnitt 3 und einen Verbindungsabschnitt 4 aufweist. In dem Verbindungsabschnitt 4 ist eine Ausnehmung 5 vorgesehen, die in die in Figur 1 gezeigte Transversalseite des Tragarms 1 mündet und in der eine Anschlussdose 6 der Anhängerkupplung angeordnet ist, die den dargestellten Tragarm 1 umfasst. Der Montageabschnitt 3 ist in Längsrichtung X von dem Lastabschnitt 2 beabstandet. Der Lastabschnitt 2 ist vorliegend als kugelartiger Kopf einer Anhängerkupplung ausgebildet und dazu ausgebildet, mit einer Kraft belastet zu werden, die in Vertikalrichtung Z mit ihrer Gewichtskraft auf ihn presst. In der Ausnehmung 5 ist ferner eine in Figur 1 nicht dargestellte Sensoreinrichtung angeordnet, die drei Dehnungsmesssensoren aufweist, die in der Ausnehmung 5 angeordnet sind. Dabei ist die Ausnehmung 5, wie aus Figur 1 ersichtlich, um eine in Transversalrichtung Y umlaufende Achse umfänglich geschlossen durch eine von dem Verbindungsabschnitt 4 ausgebildete Wand begrenzt, und die Dehnungsmesssensoren, die in Figur 1 nicht dargestellt sind, sind unmittelbar an dieser die Ausnehmung 5 begrenzenden Wand positionsfest angeordnet. Indem die Dehnungsmesssensoren zusammen mit der Anschlussdose 6 in der Ausnehmung 5 angeordnet sind, können die Dehnungsmesssensoren an eine Versorgungsleitung angeschlossen werden, an der auch die Anschlussdose 6 angeschlossen ist. Darüber hinaus sind die Dehnungsmesssensoren durch die Anordnung in der Ausnehmung 5 möglichst gut geschützt.

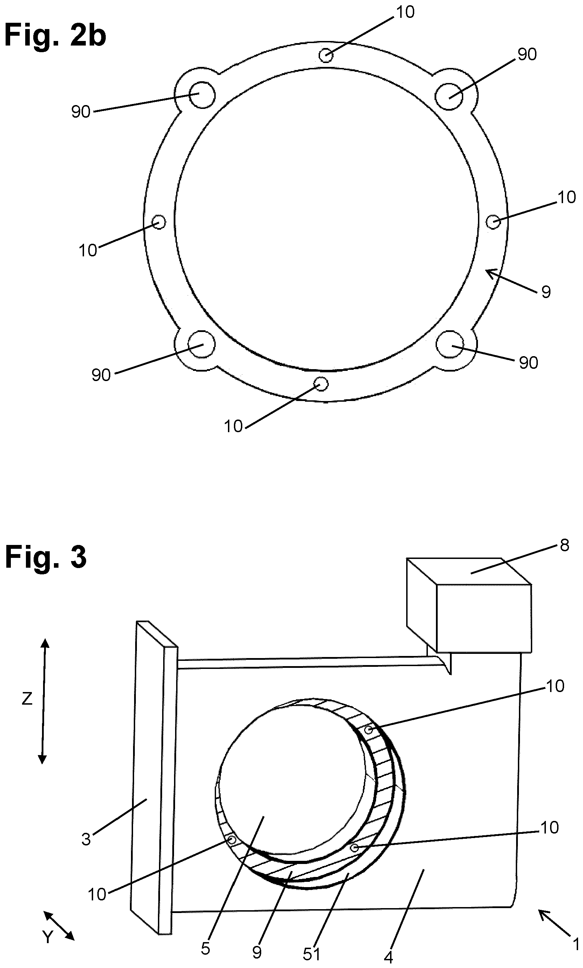

In Figur 2 umfassend die Figuren 2a und 2b sind in verschiedenen schematischen Prinzipdarstellungen Bestandteile einer Ausführungsform eines erfindungsgemäßen Tragarms 1 stark vereinfacht dargestellt. In Figur 2a ist der Tragarm 1 ohne die Dehnungsmesssoren dargestellt, jedoch als umfassend den Montageabschnitt 3, den Verbindungsabschnitt 4 und den Lastabschnitt 2. Zu Illustrationszwecken ist eine auf dem Lastabschnitt 2 aufliegende Last 8 dargestellt, die den Lastabschnitt 2 in der Vertikalrichtung Z mit ihrer Gewichtskraft belastet. In dem Verbindungsabschnitt 4 ist eine Ausnehmung 5 vorgesehen, die in Transversalrichtung Y durch den Verbindungsabschnitt 4 hindurch verläuft und somit in beide Transversalseiten des Verbindungsabschnitts 4 mündet. In der Ausnehmung 5 ist eine Stufe ausgebildet, indem sich der lichte Querschnitt der Ausnehmung 5 ausgehend von der in Figur 2a gezeigten Transversalseite des Verbindungsabschnitts 4 verjüngt. Entsprechend weist die Ausnehmung 5 einen ersten axialen Abschnitt 51 auf, indem sie einen größeren lichten Querschnitt aufweist als in einem zweiten axialen Abschnitt 52, wobei diese beiden axialen Abschnitte 51, 52 durch eine senkrecht zur Transversalrichtung Y verlaufende Begrenzungsfläche 50, die somit mit ihrer Flächennormalen in Transversalrichtung Y weist, miteinander verbunden sind. In Figur 2b ist ein Funktionsbauteil einer Ausführungsform eines erfindungsgemäßen Tragarms 1 stark vereinfacht schematisch dargestellt. Das Funktionsbauteil umfasst ein als ringförmige Platte ausgebildetes Trägerelement 9, an dem vier Dehnungsmesssensoren 10 angeordnet sind. Dabei sind nach erfolgter Montage des Funktionsbauteils an dem Tragkörper des Tragarms 1 die Dehnungsmesssensoren 10 um eine Achse, die in Transversalrichtung verläuft, verteilt angeordnet, nämlich gleichmäßig verteilt angeordnet, sodass sie um einen selben Drehwinkel um diese Achse voneinander beabstandet sind. Die Montage des Funktionsbauteils, das in Figur 2b dargestellt ist, an einem Tragkörper erfolgt dergestalt, dass das Funktionsbauteil in eine Ausnehmung 5 eingesetzt wird, wie sie beispielhaft näherungsweise in Figur 2a gezeigt ist, wonach anschließend das Trägerelement 9 durch Schrauben als Befestigungsmittel mit dem Tragkörper verschraubt wird, indem die Schrauben durch die Durchführungen 90, die in dem Trägerelement 9 vorgesehen sind, hindurchgeschraubt werden.

In Figur 3 ist in einer schematischen Prinzipdarstellung ein Tragarm 1 stark vereinfacht dargestellt. Der Tragarm 1 umfasst einen Tragkörper, wie er bei dem Ausführungsbeispiel gemäß Figur 2a gezeigt ist. Ferner umfasst der Tragarm 1 ein Funktionsbauteil, dass ein als ringförmige Platte ausgebildetes Trägerelement 9 aufweist, an dem vier Dehnungsmesssensoren 10 angeordnet sind, von denen in Figur 3 lediglich drei sichtbar sind. Das Funktionsbauteil ist mit dem Trägerelement 9 an der Befestigungsfläche 50 des Tragkörpers angeordnet und an dieser positionsfest fixiert, wie sie bei dem Ausführungsbeispiel gemäß Figur 2a gezeigt ist. Bei der Verwendung des Tragarms 1 gemäß Figur 3 zur Realisierung einer Anhängerkupplung ist in die Ausnehmung 5 ferner bei dem beschriebenen Ausführungsbeispiel eine Anschlussdose eingesetzt, sodass Anschlussdose und Dehnungsmesssensoren 10 in einer selben Ausnehmung des Tragarms 1 angeordnet sind, was erfindungsgemäß allgemein vorteilhaft ist.

Bezugszeichenliste

| | |
|---|---|
| 1 | Tragarm |
| 2 | Lastabschnitt |
| 3 | Montageabschnitt |
| 4 | Verbindungsabschnitt |
| 5 | Ausnehmung |
| 6 | Anschlussdose |
| 8 | Last |
| 9 | Trägerelement |
| 10 | Dehnungsmesssensor |
| 50 | Begrenzungsfläche |
| 51 | axialer Abschnitt |
| 52 | axialer Abschnitt |
| 90 | Durchführung |
| X | Längsrichtung |
| Z | Vertikalrichtung |

Y	Transversalrichtung

**Patentansprüche**

1.	Tragarm (1) einer Anhängerkupplung eines Kraftfahrzeugs, wobei der Tragarm (1) einen einstückigen Tragkörper aufweist, der einen Montageabschnitt (3) zum Montieren an einer Montagefläche sowie einen Lastabschnitt (2) zum Tragen einer Last (8) aufweist, die mit ihrer Gewichtskraft in einer Vertikalrichtung (Z) den Lastabschnitt (2) belastet, wobei der Montageabschnitt (3) von dem Lastabschnitt (2) in einer auf der Vertikalrichtung (Z) senkrecht stehenden Längsrichtung (X) beabstandet ist und mit dem Lastabschnitt (2) nur durch einen Verbindungsabschnitt (4) des Tragkörpers verbunden ist, wobei der Verbindungsabschnitt (4) in einer senkrecht auf Längs- und Vertikalrichtung (X, Z) verlaufenden Transversalrichtung (Y) durch zwei Transversalseiten begrenzt ist und an dem Tragkörper eine Sensoreinrichtung zum Ermitteln einer auf den Verbindungsabschnitt (4) wirkenden Kraft angeordnet ist,
	**dadurch gekennzeichnet, dass**
	die Sensormesseinrichtung mindestens einen Dehnungsmesssensor (10umfasst, der an dem Verbindungsabschnitt (4) an einer dessen Transversalseiten oder innerhalb einer in dem Verbindungsabschnitt (4) vorgesehenen, in zumindest eine seiner Transversalseiten mündenden Ausnehmung (5) angeordnet ist, wobei insbesondere die Sensormesseinrichtung mindestens drei Dehnungsmesssensoren (10) aufweist, die in der Ausnehmung (5) angeordnet und um eine in Transversalrichtung (Y) verlaufende Achse verteilt angeordnet sind.

2.	Tragarm (1) nach Anspruch 1,
	**dadurch gekennzeichnet, dass**
	die Dehnungsmesssensoren (10) gleichmäßig um die Achse verteilt angeordnet sind und/oder dass die zumindest drei Dehnungsmesssensoren (10) an jeweils einem Oberflächenabschnitt des Verbindungsabschnitts (4) angeordnet sind, wobei die Oberflächenabschnitte, die jeweils einem der mindestens drei Dehnungsmesssensoren (10) zugeordnet sind, sämtlich zueinander abgewinkelt sind, insbesondere um mindestens 30° zueinander abgewinkelt sind.

3.	Tragarm (1) nach einem der vorangehenden Ansprüche,
	**dadurch gekennzeichnet, dass**
	der zumindest eine Dehnungsmesssensor (10), insbesondere die Dehnungsmesssensoren (10), außerhalb einer neutralen Faser des Tragarms (1) angeordnet ist, wobei insbesondere der Dehnungsmesssensor (10) innerhalb der Ausnehmung (5) angeordnet ist, wobei der Dehnungsmesssensor (10) außerhalb einer Transversalmitte des Verbindungsabschnitts (4) angeordnet ist.

4.	Tragarm (1) nach einem der vorangehenden Ansprüche,
	**dadurch gekennzeichnet, dass**
	der zumindest eine Dehnungsmesssensor (10) innerhalb der Ausnehmung (5) angeordnet ist, wobei die Ausnehmung (5) durch eine um die Achse umlaufend geschlossene, von dem Verbindungsabschnitt (4) ausgebildete Wand begrenzt ist, wobei sich der Verbindungsabschnitt (4) mit einem ersten Tragabschnitt vertikal oberhalb und mit einem zweiten Tragabschnitt vertikal unterhalb der Ausnehmung (5) erstreckt und in dem ersten Tragabschnitt eine erste minimale vertikale Dicke und in dem zweiten Tragabschnitt eine zweite minimale vertikale Dicke aufweist, wobei die erste minimale Dicke zwischen 30 % und 300 % der zweiten minimalen Dicke beträgt, wobei insbesondere die Ausnehmung (5) einen ununterbrochenen lichten Querschnitt aufweist, in dem der zumindest eine Dehnungsmesssensor (10) angeordnet ist.

5.	Tragarm (1) nach einem der vorangehenden Ansprüche,
	**dadurch gekennzeichnet, dass**
	der zumindest eine Dehnungsmesssensor (10) innerhalb der Ausnehmung (5) angeordnet ist, wobei die Ausnehmung (5) durch eine von dem Verbindungsabschnitt (4) ausgebildete Begrenzungsfläche (50) begrenzt ist und die Dehnungsmesssensoren (10) an zur Achse weisenden Abschnitten der Begrenzungsfläche (50) oder an in Transversalrichtung (Y) weisenden Abschnitten der Begrenzungsfläche (50), die insbesondere durch einen Boden der Ausnehmung (5) oder eine in der Ausnehmung (5) vorgesehene Stufe ausgebildet sind, angeordnet sind.

6.	Tragarm (1) nach einem der vorangehenden Ansprüche,
	**dadurch gekennzeichnet, dass**
	der zumindest eine Dehnungsmesssensoren (10) innerhalb der Ausnehmung (5) angeordnet ist, wobei die Ausnehmung (5) an ihrem transversalen Ende durch einen Deckel verschlossen ist.

7.	Tragarm (1) nach einem der vorangehenden Ansprüche,
	**dadurch gekennzeichnet, dass**
	der zumindest eine Dehnungsmesssensor (10) innerhalb der Ausnehmung (5) angeordnet ist, wobei in der Ausnehmung (5) ferner eine elektrische Anschlussdose (6) der Anhängerkupplung angeordnet ist und der zumindest eine Dehnungsmesssensor (10) und die Anschlussdose (6) durch eine selbe Versorgungsleitung versorgt sind, die von einer Außenseite des Tragarms (1) in die Ausnehmung (5) hinein verläuft.

8.  Tragarm (1) nach einem der vorangehenden Ansprüche,
    **dadurch gekennzeichnet, dass**
    der zumindest eine Dehnungsmesssensor (10) als Halbleiter-Dehnungsmesssensor, insbesondere als Si-Dehnungsmesssensor, ausgebildet sind, wobei insbesondere der zumindest eine Dehnungsmesssensor (10) eine Dicke von weniger als 50 $\mu$m, insbesondere weniger als 40 $\mu$m und/oder eine flächige Erstreckung von weniger als 1 mm$^2$, insbesondere weniger als 0,5 mm$^2$ aufweist.

9.  Tragarm (1) nach einem der vorangehenden Ansprüche,
    **dadurch gekennzeichnet, dass**
    der zumindest eine Dehnungsmesssensor (10) auf einem Trägerelement (9), das insbesondere aus Metall hergestellt ist, positionsfest fixiert ist, wobei das Trägerelement (9) eine flächige Fixierseite aufweist, mit der es an dem Verbindungsabschnitt (4) anliegt, sowie eine der flächige Sensorseite, an der der Dehnungsmesssensor (10) angeordnet ist, wobei insbesondere die flächige Fixierseite und die flächige Sensorseite gegenüberliegende, das Trägerelement (9) mit seiner Erstreckung zwischen sich begrenzende Seiten des Trägerelements (9) sind, wobei insbesondere das Trägerelement (9) nach Art einer Platte ausgebildet ist, insbesondere nach Art einer ringförmigen Platte.

10. Tragarm (1) nach den Ansprüchen 8 und 9,
    **dadurch gekennzeichnet, dass**
    der zumindest eine Dehnungsmesssensoren (10) jeweils durch Aufglasen mit dem Trägerelement (9) verbunden ist, wobei insbesondere eine elektrisch isolierende Glasschicht zwischen dem jeweiligen Dehnungsmesssensor (10) und dem jeweiligen Abschnitt des Trägerelements (9), an dem der jeweilige Dehnungsmesssensor (10) angeordnet ist, vorgesehen ist.

11. Tragarm (1) nach Anspruch 8 und einem der Ansprüche 9 bis 10,
    **dadurch gekennzeichnet, dass**
    der zumindest eine Dehnungsmesssensor (10) eine Messfläche aufweist, die sich in einer ersten Flächenrichtung und in einer zweiten, auf der ersten senkrecht stehenden Flächenrichtung erstreckt, wobei sie sich in jeder der Flächenrichtungen über mindestens 0,1 mm und weniger als 2 mm erstreckt und/oder einen Flächeninhalt von mindestens 0,1 mm$^2$, insbesondere mindestens 0,2 mm$^2$ aufweist, wobei der zumindest eine Dehnungsmesssensor (10) über seine Messfläche hinweg starr mit dem ihnen jeweils zugeordneten Abschnitt des Trägerelements (9) verbunden ist, wobei innerhalb der Erstreckung der Messfläche entlang den Flächenrichtungen mindestens zwei Elektroden, insbesondere mindestens vier Elektroden an dem Dehnungsmesssensor (10) angeordnet sind, über die ein Messsignal, das eine Dehnung des Dehnungsmesssensors (10) in einer Messrichtung charakterisiert, auslesbar ist, wobei insbesondere die Elektroden miteinander als Vollbrücke verschaltet sind.

12. Tragarm (1) nach Anspruch 11,
    **dadurch gekennzeichnet, dass**
    der zumindest eine Dehnungsmesssensor (10) über seine Messfläche hinweg stoffschlüssig mit dem jeweiligen Abschnitt des Trägerelements (9) verbunden ist, insbesondere durch eine anorganische Verbindung zwischen dem jeweiligen Dehnungsmesssensor (10) und dem jeweiligen Oberflächenabschnitt des Trägerelements (9), wobei insbesondere an zumindest einigen der Dehnungsmesssensoren (10) mindestens 4 Elektroden angeordnet sind.

13. Tragarm (1) nach einem der Ansprüche 9 bis 12,
    **dadurch gekennzeichnet, dass**
    das Trägerelement (9) zusammen mit dem zumindest einen Dehnungsmesssensor (10) als ein separates Funktionsbauteil ausgebildet ist, das an dem Verbindungsabschnitt (4) montierbar, insbesondere lösbar montierbar ist, wobei insbesondere das Funktionsbauteil elektrische Leiter umfasst, die mit dem zumindest einen Dehnungsmesssensor (10) verbunden sind und an eine Auswerteeinrichtung anschließbar ist.

14. Verfahren zur Realisierung eines Tragarms (1), wobei ein einstückiger Tragkörper bereitgestellt wird, der einen Montageabschnitt (3) zum Montieren an einer Montagefläche sowie einen Lastabschnitt (2) zum Tragen einer Last (8) aufweist, die mit ihrer Gewichtskraft in einer Vertikalrichtung (Z) den Lastabschnitt (2) belastet, wobei der Montageabschnitt (3) von dem Lastabschnitt (2) in einer auf der Vertikalrichtung (Z) senkrecht stehenden Längsrichtung (X) beabstandet ist und mit dem Lastabschnitt (2) nur durch einen Verbindungsabschnitt (4) des Tragkörpers verbunden ist, wobei der Verbindungsabschnitt (4) in einer senkrecht auf Längs- und Vertikalrichtung (X, Z) verlaufenden Transversalrichtung (Y) durch zwei Transversalseiten begrenzt ist, wobei mindestens ein Dehnungsmesssensor (10), insbesondere mehrere Dehnungsmesssensoren (10), an dem Verbindungsabschnitt (4) an einer seiner Transversalseiten oder innerhalb einer in dem Verbindungsabschnitt (4) vorgesehenen, in zumindest eine seiner Transversalseiten mündenden Ausnehmung (5) um eine in Transversalrichtung (Y) verlaufende Achse verteilt angeordnet wird, wobei insbesondere der zumindest eine Dehnungsmesssensor (10) als Teil eines von dem Tragarm (1) separaten Funktionsbauteils, das ferner ein Trägerelement (9) umfasst, an dem der zumindest eine Dehnungsmesssensor (10) montiert ist, an dem Verbindungsabschnitt (4) angebracht werden.

15. Tragarm (1) realisiert durch das Verfahren nach Anspruch 14.

16. Messeinrichtung zur Bestimmung der Belastung eines Tragarms (1), wobei die Messeinrichtung einen Tragarm (1) nach einem der Ansprüche 1 bis 13 oder 15 sowie eine Auswerteeinrichtung umfasst, die zum Auslesen von Messsignalen des zumindest einen Dehnungsmesssensors (10) mit diesen verbunden ist und zum Auswerten der aus dem zumindest einen Dehnungsmesssensor (10) ausgelesenen Messsignale unter Ausgabe eines Werts für eine Belastung des Tragarms (1) ausgebildet ist.

**Fig. 1**

**Fig. 2a**

# Fig. 2b

# Fig. 3

## EP 4 523 930 A1

Europäisches
Patentamt

European
Patent Office

Office européen
des brevets

# EUROPÄISCHER RECHERCHENBERICHT

Nummer der Anmeldung

EP 24 19 8513

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 108541 A1 (BOSAL NEDERLAND B V [NL]) 9. November 2017 (2017-11-09) | 1-5,8-16 | INV. B60D1/06 |
| Y | * Absatz [0005]; Abbildungen 8,9 * | 7 | B60D1/24 B60D1/62 |
| | - - - - - | | |
| X | DE 10 2014 013812 A1 (WESTFALIA AUTOMOTIVE GMBH [DE]) 24. März 2016 (2016-03-24) | 1,3,5,6, 8-16 | |
| Y | * Absätze [0030], [0045]; Abbildung 7 * | 7 | |
| | - - - - - | | |
| X | US 2013/253814 A1 (WIRTHLIN ALVIN R [US]) 26. September 2013 (2013-09-26) | 1-6,8, 10,16 | |
| Y | * Absatz [0013]; Abbildungen 6,6A,6B * | 7 | |
| | - - - - - | | |
| X | US 3 990 032 A (FISH DAVID H ET AL) 2. November 1976 (1976-11-02) * Spalte 6, Zeile 42 - Zeile 65; Abbildungen 3,7 * | 1-6,8, 10,16 | |
| | - - - - - | | |
| Y | EP 2 316 669 B2 (ACPS AUTOMOTIVE GMBH [DE]) 7. Juli 2021 (2021-07-07) * Abbildung 13 * | 7 | |
| | - - - - - | | |

RECHERCHIERTE
SACHGEBIETE (IPC)

B60D

Der vorliegende Recherchenbericht wurde für alle Patentansprüche erstellt

| Recherchenort | Abschlußdatum der Recherche | Prüfer |
|---|---|---|
| Den Haag | 17. Januar 2025 | Schmidt, Rémi |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 8513

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2025

| Im Recherchenbericht angeführtes Patentdokument | Datum der Veröffentlichung | Mitglied(er) der Patentfamilie | Datum der Veröffentlichung |
|---|---|---|---|
| DE 102016108541 A1 | 09-11-2017 | DE 102016108541 A1 | 09-11-2017 |
| | | EP 3455091 A2 | 20-03-2019 |
| | | EP 4019298 A2 | 29-06-2022 |
| | | US 2019070915 A1 | 07-03-2019 |
| | | US 2022227190 A1 | 21-07-2022 |
| | | WO 2017194371 A2 | 16-11-2017 |
| DE 102014013812 A1 | 24-03-2016 | AU 2015320838 A1 | 20-04-2017 |
| | | CN 107000514 A | 01-08-2017 |
| | | DE 102014013812 A1 | 24-03-2016 |
| | | EP 3197692 A1 | 02-08-2017 |
| | | EP 3632714 A1 | 08-04-2020 |
| | | EP 4272982 A2 | 08-11-2023 |
| | | US 2017305215 A1 | 26-10-2017 |
| | | WO 2016046205 A1 | 31-03-2016 |
| US 2013253814 A1 | 26-09-2013 | KEINE | |
| US 3990032 A | 02-11-1976 | KEINE | |
| EP 2316669 B2 | 07-07-2021 | DE 102009046179 A1 | 05-05-2011 |
| | | EP 2316669 A1 | 04-05-2011 |
| | | EP 2815900 A1 | 24-12-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 2589503 B1